# FASCICULE DE BREVET EUROPEEN

(11) **EP 0 833 711 B1**
(45) Date de publication et mention de la délivrance du brevet: **21.04.1999**
(21) Numéro de dépôt: 96922108.4
(22) Date de dépôt: 12.06.1996
(51) Int. Cl.: B23C 3/05, B23Q 1/54

(54) **DISPOSITIF POUR POSITIONNER UNE BROCHE D'USINAGE PAR SA TIGE PILOTE**
VORRICHTUNG ZUM POSITIONEREN EINEM ARBEITSSPINDEL MITTELS SEIN FÜHRUNGSDORN
DEVICE FOR POSITIONING A MACHINING SPINDLE USING THE PILOT ROD THEREOF

(30) Priorité: 13.06.1995 FR 9507253
(43) Date de publication de la demande: 08.04.1998
(73) Titulaire: MACHINES SERDI, 74000 Annecy (FR)
(72) Inventeur: GERARD, Daniel, F-74100 Annemasse (FR); TENAND, Fernand, F-74940 Annecy-le-Vieux (FR)
(74) Mandataire: Perrier, Jean-Pierre
(86) Numéro de dépôt international: FR9600895
(87) Numéro de publication internationale: WO9641696

(56) Documents cités:
- EP-A- 0 263 766
- FR-A- 2 501 094
- US-A- 4 332 066

## Description

L'invention est relative à un dispositif pour aligner l'axe longitudinal d'un outil d'usinage par rapport à l'alésage d'un guide de soupape en vue de l'usinage de précision du siège ou de toute autre portée concentrique à cet alésage selon le préambule de la revendication 1.

Elle concerne plus particulièrement les dispositifs comprenant, d'une part, une tige pilote de positionnement, portée, avec l'outil d'usinage, par une broche reliée à des moyens aptes à l'entraîner en rotation et montée libre en rotation dans un fourreau déplaçable axialement, d'autre part, un support de préréglage, déplaçable dans le plan horizontal par rapport aux glissières d'un bâti et suivant au moins une direction longitudinale, ou suivant deux directions perpendiculaires, et, de plus et entre le fourreau et le support de préréglage, un moyen d'orientation angulaire de la broche par rapport à la verticale, ce moyen étant composé d'une noix sphérique traversée par le fourreau, reposant sur le siège sphérique inférieur d'un porte sphère, et coopérant avec un moyen de calage en position d'usinage.

Avec ce type de dispositif, l'opération d'alignement comprend :
- une phase de préréglage consistant à amener le dispositif au-dessus du siège, par déplacement du support de préréglage sur le bâti,
- une phase de libération des moyens de blocage ou de bridage des éléments du dispositif,
- une phase de descente du fourreau, par rapport à la noix, par des moyens d'entraînement motorisés ou à commande manuelle avec guidage manuel de la tige pilote, pour faciliter l'introduction du pilote dans le guide de soupape,
- une phase d'alignement, s'effectuant automatiquement en utilisant la rigidité de la tige entre le pilote et l'outil pour ramener l'axe de la broche en coïncidence avec l'axe du guide, par déplacement relatif des éléments du dispositif d'alignement,
- puis, enfin, une phase de blocage en position.

Selon les formes de réalisation, la noix sphérique est associée à des moyens de sustentation pneumatique, comme dans WO-A-80/01365, à des moyens de sustentation électromagnétique, comme dans EP-A-263766, ou, plus simplement, repose sur une couche de matériau à fort coefficient de glissement recouvrant le siège sphérique la supportant, et ceci afin que, après libération de ses moyens de calage en position, elle puisse pivoter librement dans ce siège pour permettre l'orientation du fourreau et, en conséquence, celui de l'axe longitudinal de la broche.

Dans le cas de dispositifs montés sur des machines de rectification de sièges de soupape nécessitant un couple moteur important, un moteur électrique, fixé sur le support de préréglage est relié à la broche, par une transmission de mouvement qui, même si elle comprend un arbre télescopique intermédiaire avec deux cardans extrêmes pour suivre les mouvements angulaires d'orientation de la broche, comme dans FR-A-2501094, gène ces mouvements et nécessite, lors de l'alignement automatique, un effort important, défavorable à la précision du positionnement recherché.

A cela, il faut ajouter que, lorsque le pilote est introduit dans l'alésage du guide de soupape, et que la tige pilote, par sa rigidité, règle la position de la broche en l'orientant angulairement et en la déplaçant dans le plan horizontal, ce déplacement s'effectue dans n'importe quelle direction par rapport à la broche, et impose de déplacer l'ensemble des organes et moyens portés par le dispositif. Pour les machines de haute gamme la masse à déplacer est de l'ordre de 140 kilogrammes. En raison de l'inertie de cette masse et des frottements entre les moyens de guidage assurant les déplacements croisés, frottements amplifiés par les décompositions d'efforts lorsque les déplacements de broche ne sont pas parallèles aux déplacements croisés, ces déplacements de la tige pilote ne s'effectuent pas parfaitement, de sorte que l'effort de réaction développé par la tige pilote est contrarié et que la tige peut rester fléchie et ne pas amener l'axe de la broche en coïncidence avec celui du guide. Cela a pour conséquence d'entraîner les imprécisions de concentricité pouvant atteindre plusieurs centièmes de millimètres, et donc inacceptables.

Ces inconvénients sont encore plus gênants lorsqu'une machine de ce type est utilisée pour la rectification des sièges de soupapes de culasses multisoupapes, par exemple à quatre soupapes par cylindre, comportant des guides soupapes de diamètre inférieur ou égal à 7 mm, car la tige pilote, ayant un diamètre de l'ordre de 4 mm, est plus flexible et plus à même de conserver une contrainte résiduelle au risque d'avoir une déformation permanente, ou lorsque, comme dans EP-A-478478, le dispositif de positionnement de la tige pilote est combiné avec des moyens permettant de déterminer, par palpage, la position géométrique moyenne de l'axe longitudinal du logement pour la soupape.

En effet, dans ces cas, et malgré la liberté de mouvement donnée à la noix sphérique, les inerties et résistances diverses aux déplacements dans le plan horizontal, perturbent, respectivement, l'alignement de la broche ou les mouvements de palpage de la face interne ovalisée de l'alésage de référence.

On connaît par FR-A-2501094 un dispositif d'alignement dans lequel l'articulation sphérique est portée par un corps de réglage qui, dans la phase d'alignement, peut coulisser dans un plan horizontal par rapport à une bride fixe le contenant, et qui, après alignement, est bloquée par des tiges de vérin.

Un tel dispositif supprime les réactions provenant des décompositions d'efforts par les mouvements des chariots croisés, mais ajoute des frottements qui, s'ajoutant aux contraintes qu'exercent sur la broche le cardan la reliant à ses moyens d'entraînement, génèrent des imprécisions d'alignement ne permettant pas d'utiliser ce dispositif pour l'usinage des sièges de soupape de culasse multisoupape.

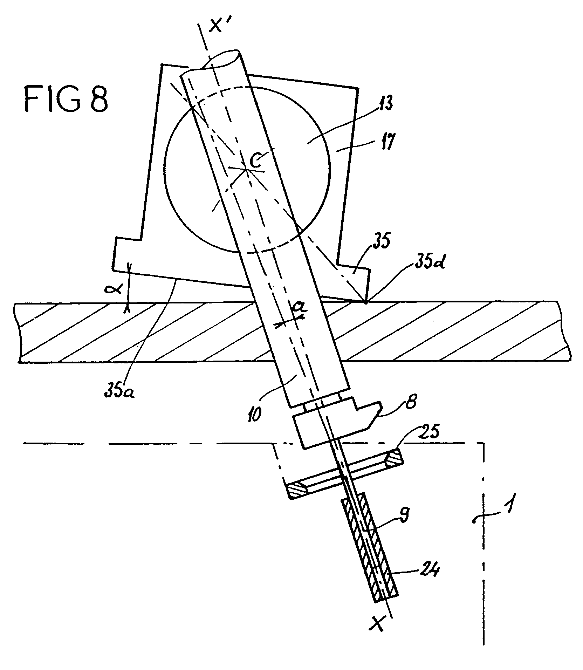

Par ailleurs, après alignement, l'actionnement des moyens de blocage du corps de réglage peut déplacer ce corps non parallèlement à lui-même en favorisant, comme montré fig. 8, un appui sur le support qui est excentré par rapport à l'axe de la broche et provoque une flexion de la broche, par basculement de celle-ci autour de son pilote encastré dans le guide de soupape. Ainsi, à l'imprécision de l'alignement automatique s'ajoute une imprécision lors du blocage.

Ces divers inconvénients sont accrus dans les dispositifs d'alignement dans lesquels le porte sphère est sustenté, en phase d'alignement, par un coussin d'air plan.

En effet, il s'avère que, pendant la phase d'alignement, les diverses masses du dispositif et en particulier celles des moyens d'entraînement en rotation de la broche, mais aussi et surtout celles d'entraînement en translation de cette broche, créent des couples de basculement sur l'ensemble broche-sphère-porte sphère, qui tendent à donner au coussin plan une forme en coin favorisant, dans la phase de bridage, le basculement du porte sphère. Cela a pour conséquence, comme montré figure 8, de désaligner l'axe de la broche par rapport à la position définie dans la phase d'alignement, et finalement d'entraîner des imprécisions.

La présente invention a pour objet de fournir un dispositif d'alignement qui remédie à ces inconvénients en réduisant les inerties et supprimant la plupart des contraintes physiques et mécaniques consécutives à la transmission du mouvement d'entraînement de la broche et au guidage des mouvements de translation de cette broche, dans sa sphère, par rapport au porte sphère et par rapport au support.

A cet effet, dans le dispositif selon l'invention, la noix sphérique porte des masses qui, équilibrant la masse des moyens d'entraînement en translation du fourreau et la masse de ce fourreau et de la broche lorsque ceux-ci sont en position abaissée d'alignement, ramènent le centre de gravité de l'ensemble sensiblement dans l'axe du fourreau, tandis que des moyens électriques de motorisation de la broche sont disposés dans le fourreau et de manière que, lorsque ce fourreau est en position abaissée d'alignement, le centre de gravité de ce fourreau soit dans l'axe et près du centre de la noix sphérique, que les moyens de génération du coussin plan entre le support et le porte sphère comprennent des gicleurs disposés dans le support en vis à vis du porte sphère et aptes à débiter un film d'épaisseur uniforme, et que les moyens de bridage comprennent des ajutages distincts des gicleurs de sustentions et aptes à être reliés à une source de vide.

Grâce à cet agencement, lorsque les moyens de calage de la noix libèrent celle-ci pour permettre d'aligner la broche avec le guide de soupape, l'orientation angulaire de la broche n'est plus entravée par une transmission mécanique créant un effort orienté. Par ailleurs, la suppression de cette transmission mécanique réduit considérablement la valeur de la masse devant être déplacée et réduit les inerties. De plus, l'organisation des masses dans le fourreau, l'équilibrage des masses de l'ensemble, le positionnement du centre de gravité dans l'axe du fourreau puis au centre de la noix, et la sustentation du porte sphère par un film d'air uniforme, suppriment toutes les contraintes extérieures, de sorte que le porte sphère dispose d'une liberté totale de déplacement dans le plan horizontal et n'engendre aucune contrainte lors de l'alignement automatique de la broche, par réaction à l'encastrement du pilote dans le guide.

De même, cet agencement favorise les déplacements du dispositif et supprime toutes contraintes parasites lors de l'opération de palpage d'un alésage par le pilote.

Enfin, l'équilibrage de l'ensemble fourreau-sphère-porte sphère, combiné avec la réalisation d'un film plan d'épaisseur uniforme, garantit le parallélisme entre la face inférieure du porte sphère et celle supérieure du support et évite, lors du bridage par dépression, toute inclinaison du porte sphère, donc toute modification de l'alignement précis réalisé dans la phase précédente.

Il apparaît ainsi que le positionnement du centre de gravité de la tête, l'aménagement des moyens d'alimentation du moteur de broche, la formation d'un film de sustentation plan et d'épaisseur constante, et le bridage par le vide coopèrent à un but commun qui est d'obtenir un parfait alignement de la broche avec le guide de soupape.

Dans une forme d'exécution de l'invention, la course de déblocage du piston, assurant le blocage de la noix sphérique par coopération avec le siège sphérique inférieur du porte sphère, est limitée par trois butées réglables vissées à 120° les unes des autres dans une paroi fixe du porte sphère.

Ainsi, dans la phase d'alignement, le coussin d'air qui est formé entre le siège sphérique inférieur et la noix sphérique est calibré par le coussin se formant entre la noix et le siège supérieur, puisque ce siège est lui-même parfaitement positionner par appui du dos du piston de blocage sur les trois butées. Il en résulte que tout déplacement transversal de la noix sphérique est empêché et que l'opération d'alignement gagne en précision.

Dans une forme d'exécution de l'invention, l'alimentation du moteur électrique disposé dans le fourreau est assurée par un circuit extérieur comportant un patin escamotable coopérant avec des organes de contact portés par la noix, de part et d'autre de son plan diamétral, et faisant partie d'un circuit interne à la noix.

Ainsi, dans la phase d'alignement ou de palpage, le patin est amené en position d'escamotage pour laisser toute liberté de mouvement à la noix sphérique. Cela a pour conséquence de libérer cette noix de toutes les contraintes, même minimes, résultant des moyens d'alimentation du moteur électrique de la broche. Après positionnement, le patin est amené en position de fonctionnement, c'est-à-dire est déplacé radialement en direction de la noix pour assurer l'alimentation du moteur électrique.

Avantageusement, chacun des gicleurs ménagés dans le support pour former le film d'air sustentant le porte sphère comporte, sur son circuit d'alimentation en air comprimé, un organe de réglage de son débit.

Cet aménagement permet, de manière simple, de régler les débits des divers gicleurs pour obtenir un film d'air d'épaisseur constante garantissant, entre la phase d'alignement et la phase de blocage, et grâce au positionnement du centre de gravité de la tête dans l'âme de celle-ci, une descente parallèle du porte sphère par rapport au support.

D'autres caractéristiques et avantages ressortiront de la description qui suit en référence aux dessins schématiques annexés représentant à titre d'exemple plusieurs formes d'exécution du dispositif selon l'invention.
La figure 1 est une vue partielle en perspective montrant schématiquement un dispositif porte-outil selon l'invention dans la phase de positionnement.
Figure 2 est une vue de côté en coupe transversale montrant une forme d'exécution du dispositif lorsqu'il est équipé d'un volant de déplacement du fourreau,.
Figure 3 est une vue de face en élévation du dispositif représenté à la figure 2.
Figure 4 est une vue de côté en coupe d'une autre forme d'exécution du dispositif.
Figure 5 est une vue en coupe longitudinale d'une forme d'exécution du fourreau contenant la broche motorisée.
Figure 6 est une vue partielle en coupe, montrant à échelle agrandie une variante de réalisation des moyens d'alimentation du moteur de broche.
Figure 7 est une vue de côté en coupe, montrant une variante des moyens de bridage.
Figure 8 est une vue schématique de côté, illustrant de manière très agrandie le défaut d'alignement résultant d'un bridage mécanique agissant sur un film de sustentation d'épaisseur irrégulière.

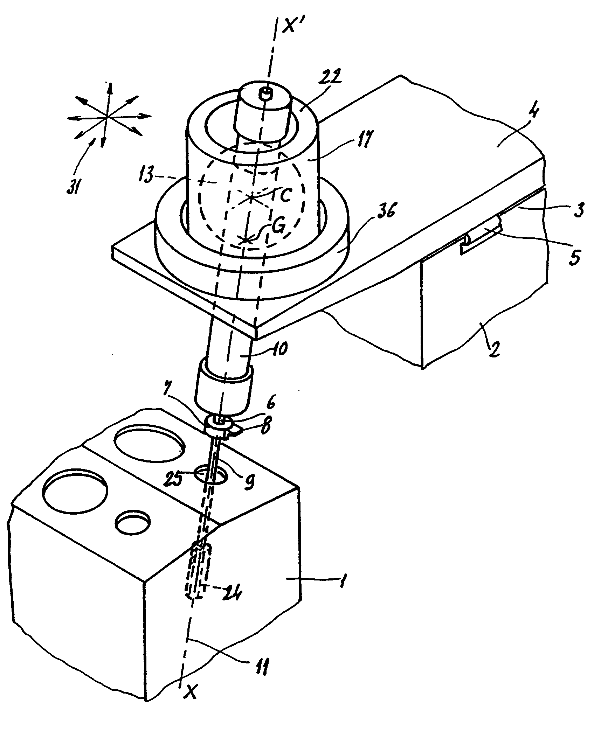

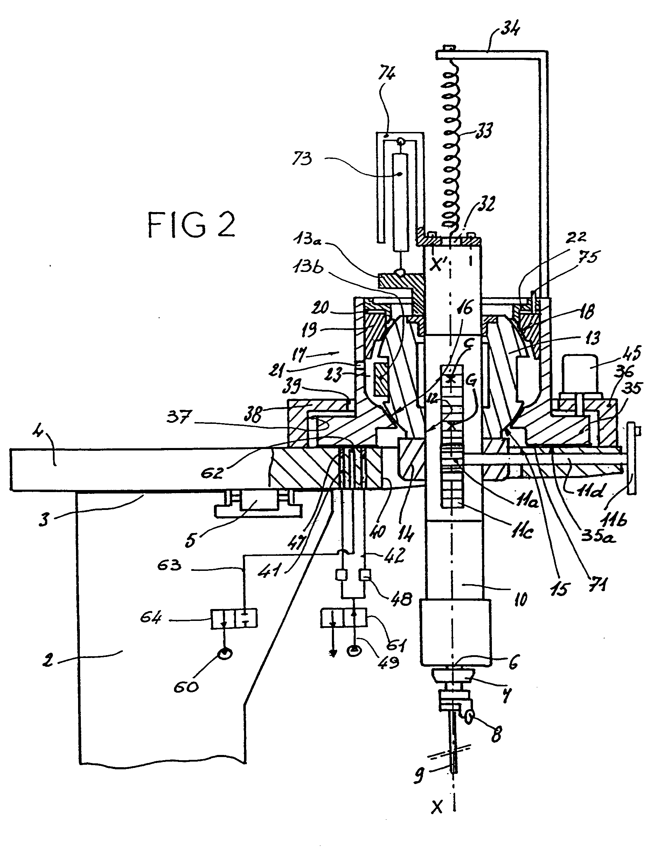

Dans ce dessin, la référence numérique 1 désigne une culasse (fig. 1), et celle 2 désigne, de manière générale, le bâti de la machine doté de glissières longitudinales 3 pour un support de préréglage 4, dont le guidage est assuré par des éléments roulants 5. La broche 6, est dotée d'un porte-outil 7 dans lequel peut être engagé un outil 8 avec sa tige pilote 9. Cette broche est montée libre en rotation dans un fourreau 10. Ce dernier est calé en rotation et monté coulissant dans l'alésage interne 12 d'une noix sphérique 13, avec possibilité de déplacement contrôlé par un dispositif de type motorisé ou mécanique. A la figure 2, ce dispositif est constitué par une roue dentée 11a entraînée par un volant 11b et coopérant avec une crémaillère 11c ménagée sur le fourreau 10. Le guidage en translation du fourreau 10 est complété par un palier inférieur 14, solidaire de la noix sphérique 13 et traversé par l'arbre 11d reliant le volant 11b à la roue dentée 11a.

La référence 73 désigne un ressort à gaz d'équilibrage qui, interposé entre la noix sphérique 13 et un support 74 lié au fourreau 10, a pour but d'accumuler de l'énergie à la descente du fourreau pour la restituer à la remontée, mais aussi de maintenir le fourreau lorsque le volant 11b n'est pas actionné.

La noix sphérique 13 est calée en rotation autour de l'axe du fourreau 10, par des moyens non représentés, et comporte une portée sphérique inférieure 15 qui repose sur un siège 16 en forme de cuvette sphérique et solidaire d'un porte sphère 17 porté par le support 4. Une portée sphérique supérieure 18 de la noix 13 est destinée à coopérer avec la portée concave correspondante d'un moyen de calage constitué, ici, par un piston 19 déplaçable verticalement dans le porte sphère 17. Dans les formes d'exécution représentées le piston 19 est déplacé dans le sens du bridage de la noix sphérique 13 par un circuit d'air comprimé parvenant à la chambre 20 ménagée entre la face supérieure de ce piston et une paroi annulaire fixe 22 du porte sphère 17.

Les moyens ici représentés correspondent à ceux décrits dans la demande internationale WO-A-80/1365 et n'ont pas à être décrits plus en détail. Il faut toutefois préciser que, lorsque le dispositif est en position de réglage de l'alignement ou de palpage, la chambre 20 est mise à l'atmosphère pour dégager le piston 19 et de l'air comprimé est introduit par un canal 21 dans la chambre centrale 23, ménagée entre la noix 13 et le corps 17, pour, d'une part, sustenter verticalement la noix et, d'autre part, former deux coussins d'air entre les portées sphériques 15 et 18 de cette noix et, respectivement, le siège 16 et le piston 19.

L'ensemble qui vient d'être décrit constitue un moyen d'orientation angulaire de la noix 13 et de la broche 6 permettant, comme montré à la figure 1, d'aligner l'axe x'x de la broche, avec l'axe longitudinal d'un guide de soupape 24, coaxial au siège de soupape 25 dont il faut assurer le réusinage, guide dans lequel est encastré le pilote 9.

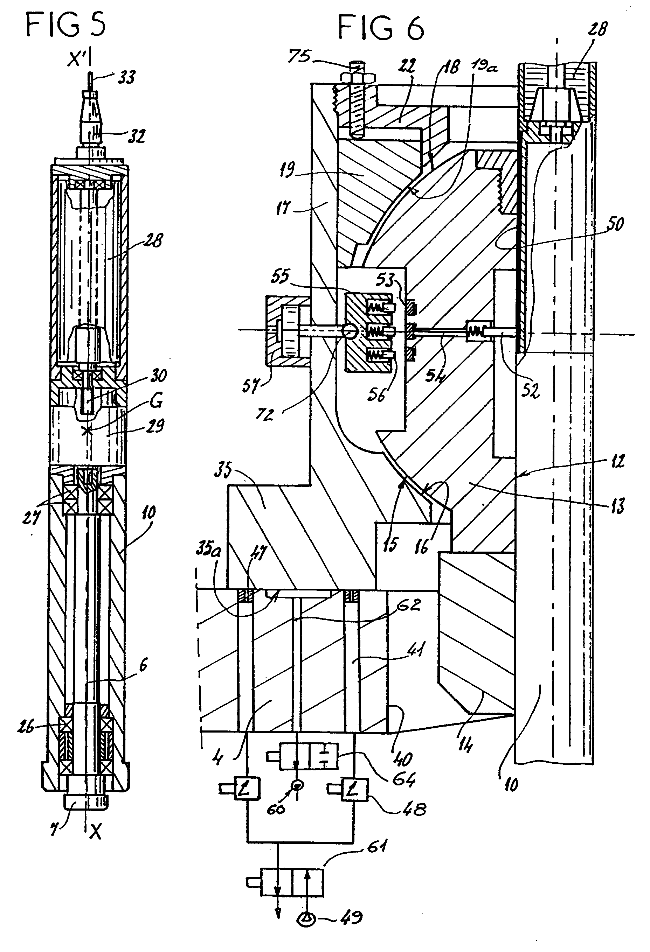

Comme montré plus en détail à la figure 5, le fourreau 10, contenant des paliers 26 et 27 de guidage en rotation de la broche 6, constitue aussi logement pour un moteur électrique 28 et pour les moyens 29 transmettant le mouvement entre son arbre de sortie 30 et l'extrémité de la broche 6. Dans la forme d'exécution représentée, les moyens 29 sont constitués par un réducteur, mais ils peuvent prendre toute autre forme, sans sortir du cadre de l'invention.

Grâce à cela, le centre de gravité G de la tête formé par le fourreau et les éléments qu'il contient, qui y aboutissent et qu'il porte, est disposé sur l'axe x'x de la broche 6.

Par ailleurs, et suivant une autre caractéristique de l'invention, la noix sphérique 13 porte des masses 13a et 13b qui équilibrent la masse des moyens 11a à 11d d'entraînement en translation du fourreau 10, mais aussi la masse de ce fourreau 10 et de la broche 6 lorsque ces derniers sont en position d''alignement, c'est à dire abaissés. Cet équilibrage est destiné à ramener le centre de gravité de cet ensemble sur l'axe x'x du fourreau 10 et de supprimer les couples parasites lors des déplacements de la broche dans la phase d'alignement. De plus, ces divers éléments sont disposés les uns par rapport aux autres de manière que lorsque le fourreau est en position d'alignement, c'est-à-dire est abaissé pour permettre l'introduction du pilote 9 dans le guide de soupape 24, le centre de gravité G soit près du centre C de la noix sphérique 13, comme montré à la figure 1.

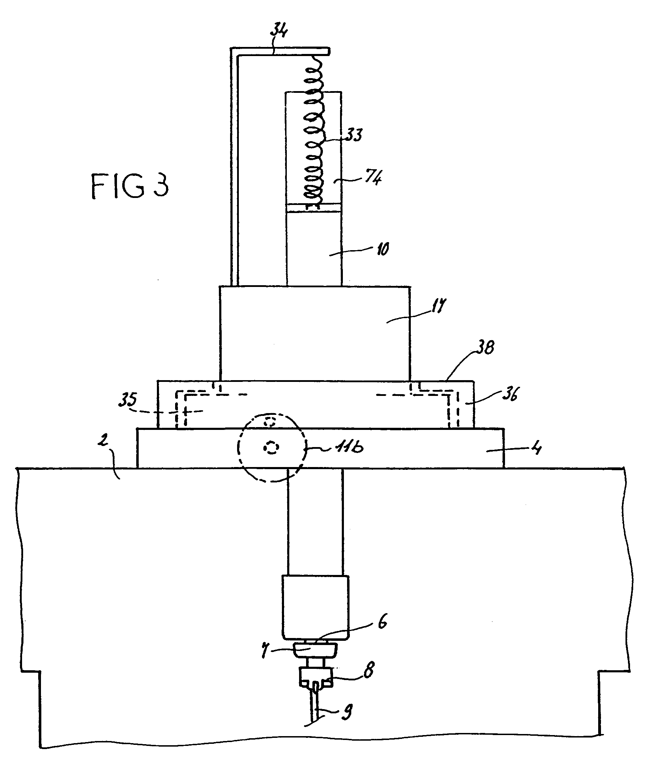

Aux figures 2 à 5, l'alimentation du moteur électrique 28 est assurée par un connecteur axial 32 terminant un cordon souple 33 enroulé en hélice et dont l'extrémité supérieure est accrochée à une potence 34 solidaire du porte sphère 17. Grâce à cette disposition, le cordon exerce sur la tête d'usinage une contrainte très faible, ne pouvant pas entraver ces divers mouvements lors de la phase d'alignement.

La figure 2 montre bien que, grâce à ce montage particulier, la tête de la machine est débarrassée de toute transmission et que, de ce fait, l'orientation angulaire de la broche 6 est libérée de toutes les contraintes inhérentes à cette transmission. Il en est de même pour les mouvements de déplacement dans le plan horizontal, mouvements qui, débarrassés de l'inertie du moteur et de la transmission intermédiaire, s'effectuent sans effort de démarrage important, puis, très librement.

Le porte sphère 17, présentant une forme générale cylindrique, est solidaire d'une collerette cylindrique 35 dont la face inférieure 35a repose directement sur la face supérieure du support de préréglage 4. Il peut être utilisé seul ou être disposé dans un boîtier cylindrique 36, fixé sur le support 4 et comportant un alésage intérieur 37 de plus grand diamètre que le diamètre extérieur de la collerette 35, de manière à ménager un jeu radial avec cette collerette. De même, la paroi supérieure 38 du boîtier est à distance de la face supérieure de la collerette 35, de manière à permettre le libre déplacement de celle-ci. Cette paroi supérieure comporte une ouverture axiale 39 dont le diamètre est plus grand que le diamètre extérieur du corps cylindrique 17, et le support 4 est traversé par une ouverture 40 de plus grand diamètre que le diamètre extérieur du palier inférieur 14 solidaire de la noix 13.

On conçoit aisément que, grâce à cette structure, le porte sphère 17 et en conséquence la noix 13, le fourreau 10, et la broche 6 peuvent être déplacés radialement dans toutes les directions à partir de l'axe longitudinal du corps, comme montré par les flèches 31 à la figure 1, mais aussi en translation de part et d'autre de l'axe longitudinal théorique du boîtier 36, et cela dans les limites permises par le jeu radial entre la collerette 35 et l'alésage interne 37 du boîtier 36.

Cette disposition supprime tous les inconvénients inhérents à l'utilisation de chariots à mouvements croisés, ou autres mouvements ayant une direction orientée par une contrainte d'ordre mécanique, et permet, dans le cas d'une machine pour l'usinage des sièges de soupapes, de n'utiliser les mouvements du support 4 que pour prépositionner la tête par rapport à la zone de travail sur la culasse 1 (figure 1).

Pour faciliter ce mouvement, et comme montré à la figure 2, la zone du support 4, qui est sous jacente au boîtier 36 et plus spécialement à la zone de déplacement de la collerette 35, est traversée par des canaux 41 raccordés à un circuit 42 de gaz sous pression 49, et notamment d'air comprimé, contrôlé par un distributeur 61. Dans ces conditions, l'alimentation des canaux 41 par l'air sous pression crée un film d'air 71 entre la collerette 35 et le support 4, film assurant la sustentation du porte sphère 17, et de tous les organes qu'il contient, et facilitant les déplacements de ce corps par rapport au support 4.

Cet aménagement réduit les frottements, et permet, en combinaison avec les deux coussins d'air favorisant l'orientation de la noix sphérique 13, dans la phase d'alignement, de libérer la tête de toute contrainte, et, lors d'un palpage, de libérer l'ensemble de palpage de tout effort en facilitant cette opération.

Il est précisé que les relevés effectués par l'opération de palpage sont enregistrés par des moyens mécaniques ou électroniques qui n'ont pas à être décrits ici, car sans rapport avec l'objet de l'invention.

Avantageusement, et comme montré figure 6, la paroi annulaire fixe 22 du porte sphère 17 est traversée par trois vis 75 parallèles à l'axe x'x, réparties à 120° les unes des autres et constituant butées pour le piston 19. Ainsi, lorsque la chambre 20 est mise à l'atmosphère et que de l'air comprimé est introduit dans la chambre 23, le recul du piston 19 amène son dos en parfait appui contre les trois butées 75, de sorte qu'il reste parfaitement positionné. Il en est de même pour son siège sphérique 19a qui calibre ainsi le film d'air passant entre lui et la portée supérieure 18 de la noix 13. Ce calibrage assure l'autocentrage de la noix sphérique 13 et le calibrage du film d'air passant entre sa portée inférieure 15 et le siège 16 du porte sphère. Cet agencement évite tout décentrage de la noix sphérique 13 pouvant influer sur la précision de l'opération d'alignement et ultérieurement sur la précision du bridage.

Lorsque l'opération d'alignement ou de palpage est terminée et que la position de la broche est définitive, il est procédé à son blocage en position. La noix sphérique est calée par déplacement pneumatique du piston 19 puis il est procédé au bridage du porte sphère 17.

Pour éviter, comme montré figure 8, que, lors de ce bridage la collerette 35 vienne prendre appui sur le support 4, en 35d, c'est-à-dire avec excentration en provoquant le basculement excentré du porte sphère 17 et le basculement de l'axe x'x de la broche 6 autour de l'encastrement du pilote 9 dans le guide 24, et sur un angle a, et, en conséquence, décale cet axe, par rapport à sa position définie par l'opération d'alignement avec l'axe du guide, des moyens sont prévus pour former un film d'air d'épaisseur constante entre le support 4 et le porte sphère 17, et d'autres moyens organisent la suppression de ce film.

Les moyens donnant une épaisseur constante au film d'air sont constitué par des gicleurs 47 qui, disposés à la sortie des canaux 41 sont associés chacun à un organe 48 de réglage de leur débit, comme montré figure 6. C'est grâce au positionnement du centre de gravité sur l'axe x'x de l'ensemble comprenant le porte sphère, la noix sphérique et le fourreau, et au réglage des gicleurs qu'il est possible d'obtenir un film d'air plan 71 d'épaisseur uniforme et à obtenir, lors du bridage, le déplacement du porte sphère parallèlement à lui-même.

Les moyens organisant la suppression du film d'air 71 et en conséquence le bridage sont constitués, comme montrés fig. 2 et 6, par des canaux avec ajutages 62 qui, distincts des canaux 41 avec gicleurs 47, sont reliés par des conduits 63, à un distributeur 64, pouvant soit les isoler, soit les mettre en communication avec une source de vide 60.

Avec cet agencement, lorsque l'opération d'alignement est terminé, le distributeur 61, à commande manuelle ou électromagnétique, est actionné pour couper l'alimentation en air comprimé 49 et mettre le film d'air 71 en liaison avec l'atmosphère 59. En raison de l'épaisseur régulière du film et de sa faible épaisseur, de l'ordre de quelque centièmes de millimètres, le porte sphère 17 descend parallèlement sur lui-même tout en suivant l'axe de la broche, grâce au guidage assuré par le glissement du pilote 9 dans le guide de soupape 24. Dès que le porte sphère 17 repose sur le support 4, le distributeur 64 est actionné et met les canaux 41 avec ajutage 62 en communication avec la source de vide 60 afin de créer une dépression bloquant le porte sphère 17 sur le support 4 et assurant le bridage du positionnement obtenu.

Ce bridage est en général suffisant pour résister aux efforts de coupe généralement rencontrés. Il peut cependant être complété par un bridage mécanique.

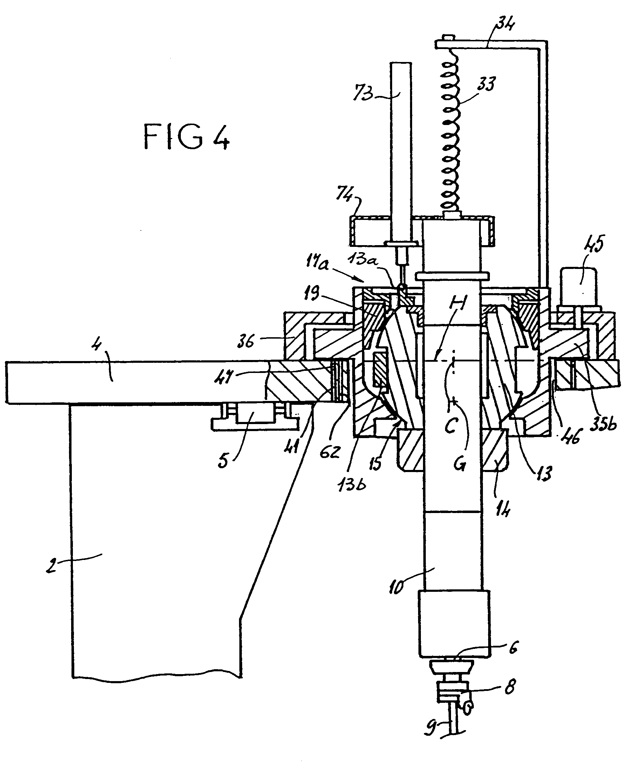

Aux figures 2 et 4, les moyens de bridage mécanique sont constitués par plusieurs vérins pneumatiques 45 répartis autour du porte sphère 17 et dont les corps sont fixés sur la face supérieure 38 du boîtier 36, alors que leur tige traverse cette paroi 38 pour venir en contact avec la face supérieure de ladite collerette.

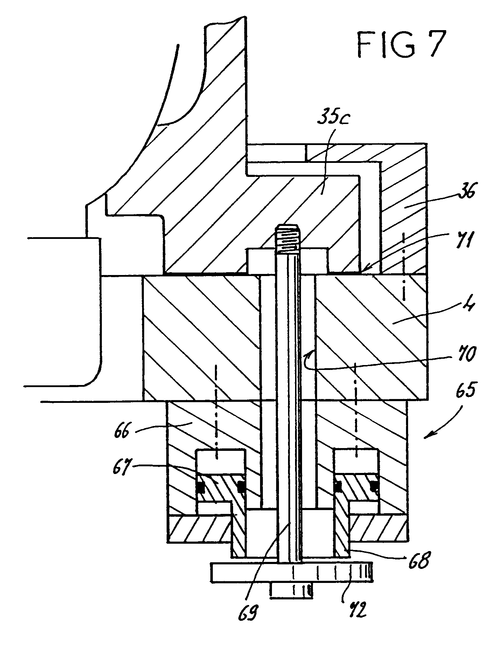

Dans la variante représentée à la figure 7, les vérins 65, par exemple au nombre de trois et répartis à 120° autour d'un axe longitudinal et vertical du boîtier 36, sont disposés au-dessous du support 4 contre lequel leurs corps 66 sont fixés. Leurs pistons 67 sont équipés d'un moyeu tubulaire 68 qui est traversé par une tige axiale 69. Chaque tige, dont l'extrémité supérieure est vissée dans la collerette 35c du corps 17, traverse un alésage 70 du support 4 et le moyeu tubulaire 68, avec un jeu correspondant au jeu du déplacement de la collerette 35c dans le boîtier 36. Enfin, son extrémité inférieure dépassant du moyeu est solidaire d'une rondelle 72 apte à recevoir la poussée du moyeu 68 du piston 67.

Ainsi, lorsque la collerette 35c est sustentée par un coussin d'air 71, les vérins de bridage 65 ne s'opposent pas à ses déplacements, et, lors du bridage, l'effort des vérins se transmet directement par les tiges 69 à la collerette 35c.

Dans la forme d'exécution représentée à la figure 4, le dispositif se différencie du précédent par le fait que le centre C de la noix sphérique 13 est disposé sensiblement dans le plan horizontal H de la face supérieure du support 4. De ce fait, le corps cylindrique 17a s'étend de part et d'autre de la collerette 35b et, dans sa partie inférieure, traverse une ouverture 46 du support 4.

Grâce à cet agencement, l'orientation angulaire de la broche est indépendante de son positionnement dans le plan horizontal, ce qui améliore encore les conditions d'alignement ou de palpage.

Enfin, pour supprimer la très faible gène pouvant être causée par le cordon d'alimentation 33 du moteur électrique 28, il est possible de remplacer ce type d'alimentation par celui, représenté à la figure 6, s'effectuant sensiblement dans le plan médian horizontal de la noix sphérique 13. Cette alimentation est composée d'un circuit intérieur comprenant :
- des barrettes longitudinales 50, en matériau conducteur de l'électricité, affleurant la face externe du fourreau 10 et reliées électriquement au circuit d'alimentation du moteur électrique disposé à l'intérieur de ce fourreau,
- des plots de contact 52 débouchant dans l'alésage axial 12 de la noix 13 et aptes à venir en contact avec les barrettes 50,
- et des tronçons de barrettes circulaires 53 saillant à l'extérieur de la noix, réparties de part et d'autre de son plan diamétral horizontal et reliées électriquement aux plots 52 par des circuits 54,
- et un circuit extérieur aboutissant à un patin de contact 55.

Ce patin porte des plots de contact à ressort 56, raccordés électriquement au circuit d'alimentation extérieur. Le patin 55 est monté flottant sur un moyen apte à le déplacer entre une position de fonctionnement, dans laquelle ses doigts 56 viennent en contact avec les barrettes 53, et une position d'escamotage, dans laquelle ses doigts sont éloignés de ces barrettes. Dans la forme d'exécution représentée, ce moyen est constitué par un vérin 57 dont le corps est fixé sur la partie extérieure du porte sphère 17 et dont la tige traverse ce porte sphère pour prendre appui par une rotule 72 sur le patin.

On conçoit aisément que, dans la phase de réglage, le patin 55 est amené en position escamotée pour libérer totalement le noix 13 et que, après réglage de positionnement de l'outil, il est amené en position de fonctionnement avec ses doigts 56 en contact contre les barrettes 53. Il est précisé que, en raison du faible angle d'orientation angulaire de la noix 13 dans la phase de réglage, de l'ordre de 1 à 5°, les variations de position des faces de contact des barrettes 53 sont aisément compensées par le montage flottant du patin 55 mais aussi par le montage, flottant et élastique, de ses doigts de contact.

Il ressort de ce qui précède que le dispositif selon l'invention, en libérant de toutes contraintes extérieures les moyens de réglage de l'inclinaison et de la position verticale de l'axe longitudinal de la broche, supprime les à-coups, réduit les efforts, et rend le réglage plus précis, puisqu'une concentricité de l'ordre de 0,02 mm peut être obtenue régulièrement. Ce dispositif favorise également le palpage qui peut devenir manuel.

On notera, par ailleurs, que la suppression de la transmission extérieure, de type à arbre télescopique et à double cardans, entre le moteur et la broche, permet d'augmenter la vitesse de rotation de la broche et d'obtenir les vitesses nécessaires pour l'usinage des sièges et des guides de soupapes de petites dimensions.

## Revendications

1. Dispositif pour aligner l'axe longitudinal d'un outil avec l'axe d'un guide de soupape, dans lequel, d'une part, l'outil, calé dans une broche (6), est solidaire d'une tige pilote (9) coaxiale à lui, et, d'autre part, les moyens d'alignement comprennent :
- un support de préréglage (4) déplaçable dans le plan horizontal et au moins longitudinalement sur un bâti fixe (2),
- un porte sphère (17) posé sur le support (4) avec possibilité, dans la phase de positionnement de la broche et après libération de moyens de bridage, de déplacement dans toutes les directions du plan horizontal, grâce à un coussin d'air plan formé entre lui et le support (4),
- une noix sphérique (13) montée dans un siège (16) du corps de réglage avec possibilité de libre rotation, dans la phase de positionnement de la broche et après libération de moyens de calage,
- un fourreau (10) sensiblement vertical, déplaçable axialement dans la noix (13) et portant la broche (6) d'entraînement de l'outil,
**caractérisé en ce que** la noix sphérique porte des masses qui, équilibrant la masse des moyens d'entraînement en translation du fourreau et la masse de ce fourreau et de la broche lorsque ceux-ci sont en position abaissée d'alignement, ramènent le centre de gravité (G) de l'ensemble sensiblement dans l'axe (x,x') du fourreau (10), tandis que des moyens électriques (28, 29) de motorisation de la broche (6) sont disposés dans le fourreau (10) et de manière que, lorsque ce fourreau est en position abaissée d'alignement, le centre de gravité de ce fourreau soit dans l'axe (x',x) et près du centre (C) de la noix sphérique (13), que les moyens de génération du coussin plan entre le support (4) et le porte sphère (17) comprennent des gicleurs disposés dans le support (4) en vis à vis du porte sphère (17) et aptes à débiter un film d'épaisseur uniforme, et que les moyens de bridage comprennent des ajutages (62) distincts des gicleurs (47) de sustentions et aptes à être reliés à une source de vide.

2. Dispositif selon la revendication 1 **caractérisé en ce que** la course de déblocage d'un piston (19), assurant le blocage de la noix sphérique (13) par coopération avec le siège sphérique inférieur (16) du porte sphère (17), est limitée par trois butées réglables (75) vissées à 120° les unes des autres dans une paroi fixe (22) du porte sphère.

3. Dispositif selon la revendication 1 **caractérisé en ce que** l'alimentation d'un moteur électrique (28) disposé dans le fourreau (10) est assurée par un cordon électrique souple (33) enroulé en hélice dont l'extrémité supérieure est accrochée à une potence (34) liée au corps et dont l'extrémité inférieure est solidaire d'un connecteur (32) disposé sensiblement dans l'axe longitudinal de ce fourreau.

4. Dispositif selon la revendication 1 **caractérisé en ce que** l'alimentation du moteur électrique (28) disposé dans le fourreau (10) est assurée par un circuit extérieur comportant un patin escamotable (55) coopérant avec des organes de contact portés par la noix (13), de part et d'autre de son plan diamétral, et faisant partie d'un circuit interne à la noix.

5. Dispositif selon la revendication 4 **caractérisé en ce que** l'alimentation du moteur électrique (28) est assurée, d'une part, par des barrettes longitudinales (50) conductrices de l'électricité, affleurant la face extérieure du fourreau (10) et venant en contact avec des plots (52), débouchant de l'alésage axial (12) de la noix, ces plots étant eux-mêmes reliés électriquement, par un circuit (54) disposé à l'intérieur de la noix, à des tronçons (53) de barrettes circulaires, saillant à l'extérieur de la noix et répartis de part et d'autre de son plan diamétral horizontal, et, d'autre part, par un patin (55) qui, porteur de doigts de contact à ressort (56) aptes à coopérer avec les tronçons (53) de barrettes circulaires, est porté par le porte sphère (17) et par un moyen apte à le déplacer entre une position de fonctionnement, dans laquelle ses doigts (56) sont en contact avec les barrettes (53), et une position d'escamotage, dans laquelle ses doigts sont espacés des barrettes.

6. Dispositif selon les revendications 4 et 5 **caractérisé en ce que** le patin (55) est monté flottant à l'extrémité libre de la tige d'un vérin à fluide (57), dont le corps est fixé sur le porte sphère (17) contenant la noix sphérique (13).

7. Dispositif selon la revendication 1 **caractérisé en ce que** chacun des gicleurs (47) ménagés dans le support (4) pour former le film d'air sustentant le porte sphère (17) comporte, sur son circuit d'alimentation en air comprimé, un organe de réglage de son débit (48) pour obtenir un film d'air d'épaisseur constante.

8. Dispositif selon la revendication 1 **caractérisé en ce que** le porte sphère (17) est solidaire d'une collerette périphérique (35c) par lequel il vient en contact avec le support (4) et cette collerette est associée à des moyens de bridage mécanique constitués par des vérins (65), disposés au-dessous du support (4) contre lequel leurs corps (66) sont fixés, et par des tiges (69) liées à la collerette (35c), chaque tige traversant avec jeu un alésage (70) du support (4) et le moyeu tubulaire (68) du piston (67) du vérin correspondant et comportant, à son extrémité libre inférieure, une rondelle (72) apte à recevoir la poussée du moyeu (68) dans la phase de bridage.

9. Dispositif selon la revendication 1 **caractérisé en ce que** le centre de rotation C de la noix sphérique (13) est dans le plan horizontal H défini par la face du porte sphère (17) reposant sur le support (4).

## Claims

1. Device for aligning the longitudinal axis of a tool with the axis of a valve guide, in which, on the one hand, the tool, keyed in a spindle (6), is integral with a pilot rod (9) which is coaxial with it, and, on the other hand, the alignment means comprise:
- a pre-adjustment support (4) movable in the horizontal plane and at least longitudinally on a fixed base (2),
- a ball support (17) located on the support (4) and capable of being moved, at the stage of the positioning of the spindle and after the release of clamping means, in all directions of the horizontal plane, owing to a flat cushion of air formed between it and the support (4),
- a spherical holder (13) mounted in a seat (16) in the adjustment body and capable of being freely rotated, at the stage of the positioning of the spindle and after the release of keying means,
- a substantially vertical sleeve (10) movable axially in the holder (13) and carrying the tool drive spindle (6),
characterized in that the spherical holder carries masses which, by balancing the mass of the means of moving the sleeve in translation and the mass of this sleeve and of the spindle when these are in the lowered alignment position, bring the centre of gravity (G) of the assembly substantially into the axis (x,x') of the sleeve (10), electrical means (28, 29) of driving the spindle (6) being located in the sleeve (10) and in such a way that, when this sleeve is in the lowered alignment position, the centre of gravity of this sleeve lies in the axis (x',x) and near the centre (C) of the spherical holder (13), in that the means of generating the flat cushion between the support (4) and the ball support (17) comprise jets located in the support (4) facing the ball support (17) and capable of emitting a film of uniform thickness, and in that the clamping means comprise nozzles (62) which are separate from the suspension jets (47) and can be connected to a vacuum source.

2. Device according to Claim 1, characterized in that the release travel of a piston (19) which locks the spherical holder (13) by interaction with the lower spherical seat (16) of the ball support (17) is limited by three adjustable stops (75) screwed at intervals of 120° into a fixed wall (22) of the ball support.

3. Device according to Claim 1, characterized in that the power supply to an electric motor (28) located in the sleeve (10) is provided by a flexible spiral electrical cord (33) whose upper end is fixed to a bracket (34) connected to the body and whose lower end is integral with a connector (32) located substantially in the longitudinal axis of this sleeve.

4. Device according to Claim 1, characterized in that the power supply to an electric motor (28) located in the sleeve (10) is provided by an external circuit comprising a retractable block (55) interacting with contact members carried by the holder (13), on either side of its diametral plane, and forming part of a circuit inside the holder.

5. Device according to Claim 4, characterized in that the power supply to the electric motor (28) is provided, on the one hand, by electrically conducting longitudinal bars (50) touching the outer surface of the sleeve (10) and coming into contact with pins (52) emerging from the axial bore (12) of the holder, these pins being connected electrically, by a circuit (54) located inside the holder, to sections (53) of circular bars projecting on the exterior of the holder and distributed on either side of its horizontal diametral plane, and, on the other hand, by a block (55), which carries spring-loaded contact pins (56) capable of interacting with the sections (53) of circular bars, and is carried by the ball support (17) and by a means capable of moving it between an operating position in which its pins (56) come into contact with the bars (53) and a retracted position in which its pins are held away from the bars.

6. Device according to Claims 4 and 5, characterized in that the block (55) is mounted in a floating way at the free end of the rod of a hydraulic actuator (57) whose body is fixed to the ball support (17) containing the spherical holder (13).

7. Device according to Claim 1, characterized in that each of the jets (47) provided in the support (4) to form the film of air suspending the ball holder (17) comprised, in its compressed air supply circuit, an element for adjusting its flow (48) to obtain a film of air of constant thickness.

8. Device according to Claim 1, characterized in that the ball support (17) is integral with a peripheral collar (35c) with which it comes into contact with the support (4) and this collar is associated with mechanical clamping means consisting of actuators (65) located under the support (4) against which their bodies (66) are fixed, and of rods (69) connected to the collar (35c), each rod passing with a clearance through a bore (70) of the support (4) and the tubular boss (68) of the piston (67) of the corresponding actuator and having, at its lower free end, a washer (72) capable of receiving the thrust of the boss (68) at the clamping stage.

9. Device according to Claim 1, characterized in that the centre of rotation C of the spherical holder (13) lies in the horizontal plane H defined by the surface of the ball support (17) resting on the support (4).

## Patentansprüche

1. Vorrichtung zum Ausrichten der Längsachse eines Werkzeugs zu der Achse einer Ventilführung, worin einerseits das in einer Welle (6) festgesetzte Werkzeug mit einer hierzu koaxialen Führungsstange (9) verbunden ist, und andererseits die Ausrichtungsmittel umfassen:
- einen Voreinstellungsträger (4), der in der horizontalen Ebene und Wenigstens in Längsrichtung an einem festen Gestell (2) verlagerbar ist,
- einen Kugelträger (17), der an dem Träger (4) mit der Möglichkeit der Verlagerung in alle Richtungen der horizontalen Ebene in der Phase der Positionierung der Wolle und nach Befreiung von Anflanschmitteln dank eines zwischen ihm und dem Träger (4) gebildeten flachen Luftpolsters angeordnet ist,
- eine Kugelnuß (13), die in einem Sitz (16) des Einstellkörpers mit der Möglichkeit freier Drehung in der Phase der Positionierung der Welle und nach Befreiung von Feststellmitteln angeordnet ist,
- eine im wesentlichen vertikale Hülse (10), die axial in der Nuß (13) verlagerbar ist und die Werkzeugantriebswelle (6) trägt,
**dadurch gekennzeichnet**, daß die Kugelnuß Massen trägt, welche die Masse der Verschiebungs-Antriebsmittel der Hülse und die Masse dieser Hülse und der Welle ausbalancieren, wenn diese in abgesenkter Ausrichtungsstellung sind, und den Schwerpunkt (G) der Gesamtanordnung im wesentlichen in die Achse (x, x') der Hülse (10) zurückbringen, wohingegen elektrische Mittel (28, 29) zur Motorisierung der Welle (6) in der Hülse (10) derart angeordnet sind, daß der Schwerpunkt dieser Hülse in der Achse (x', x) und nahe am Zentrum (C) der Kugelnuß (13) ist, wenn diese Hülse in abgesenkter Ausrichtungsstellung ist, daß die Mittel zur Erzeugung des flachen Polsters zwischen dem Träger (4) und dem Kugelträger (17) Düsen umfassen, welche im Träger (4) dem Kugelträger (17) gegenüberliegend angeordnet sind und dazu ausgelegt sind, einen Film gleichförmiger Dicke zu liefern, und daß die Anflanschmittel Anschlußstücke (62) umfassen, welche von den Auftriebsdüsen (47) getrennt und dazu ausgelegt sind, mit einer Vakuumquelle verbunden zu sein.

2. Vorrichtung nach Anspruch 1, **dadurch gekennzeichnet**, daß der Freigabehub eines Kolbens (19), der die Verriegelung der Kugelnuß (13) durch Zusammenwirken mit dem unteren kugelförmigen Sitz (16) des Kugelträgers (17) gewährleistet, durch drei einstellbare Anschläge (75) begrenzt ist, welche um 120° gegeneinander versetzt in eine feste Wand (22) des Kugelträgers geschraubt sind.

3. Vorrichtung nach Anspruch 1, **dadurch gekennzeichnet**, daß die Versorgung eines in der Hülse (10) angeordneten Elektromotors (28) durch ein schraubenlinienförmig aufgewickeltes flexibles Elektrokabel (33) gewährleistet ist, dessen oberes Ende an einem mit dem Körper verbundenen Arm (34) befestigt ist und dessen unteres Ende mit einem im wesentlichen in der Längsachse dieser Hülse angeordneten Verbinder (32) verbunden ist.

4. Vorrichtung nach Anspruch 1, **dadurch gekennzeichnet**, daß die Versorgung des in der Hülse (10) angeordneten Elektromotors (28) durch eine äußere Schaltung gewährleistet ist, die ein einziehbares Gleitelement (55) umfaßt, welches mit durch die Nuß (13) getragenen und einen Teil einer inneren Schaltung der Nuß bildenden Kontaktorganen auf beiden Seiten ihrer Diametralebene zusammenwirkt.

5. Vorrichtung nach Anspruch 4, **dadurch gekennzeichnet**, daß die Versorgung des Elektromotors (28) einerseits durch elektrisch leitfähige Längsstäbe (50) gewährleistet ist, die mit der Außenfläche der Hülse (10) fluchten und in Kontakt mit in die axiale Bohrung 12 der Nuß ragenden Stiften (52) gelangen, wobei diese Stifte selbst durch eine im Inneren der Nuß angeordnete Schaltung (54) mit Abschnitten (53) von Kreisstäben elektrisch verbunden sind, welche außen an der Nuß vorstehen und an beiden Seiten ihrer horizontalen Diametralebene verteilt sind, und andererseits durch ein Gleitelement (55), welches zum Zusammenwirken mit den Abschnitten (53) der Kreisstäbe ausgelegte Federkontaktfinger (56) trägt und durch den Kugelträger (17) und durch ein Mittel getragen ist, das dazu ausgelegt ist, es zwischen einer Funktionsstellung, in welcher seine Finger (58) in Kontakt mit den Stäben (53) sind, und einer Rückziehstellung, in welcher seine Finger von den Stäben beabstandet sind, zu verlagern.

6. Vorrichtung nach Anspruch 4 und 5, **dadurch gekennzeichnet**, daß das Gleitelement (55) beweglich am freien Ende der Stange eines Fluidzylinders (57) angeordnet ist, dessen Gehäuse an dem die Kugelnuß (13) enthaltenden Kugelträger (17) befestigt ist.

7. Vorrichtung nach Anspruch 1, **dadurch gekennzeichnet**, daß jede der im Träger (4) zur Bildung des Auftriebsluftfilms für den Kugelträger (17) vorgesehenen Düsen (47) in ihrem Druckluft-Versorgungskreis ein Organ zur Regelung ihrer Rate (48) umfaßt, um einen Luftfilm konstanter Dicke zu erhalten.

8. Vorrichtung nach Anspruch 1, **dadurch gekennzeichnet**, daß der Kugelträger (17) mit einem Umfangskragen (35c) verbunden ist, durch welchen er in Kontakt mit dem Träger (4) gelangt, und daß dieser Kragen mechanischen Anflanschmitteln zugeordnet ist, die gebildet sind durch Zylinder (65), welche unter dem Träger (4), an dem ihre Gehäuse (66) befestigt sind, angeordnet sind, und durch mit dem Kragen (35c) verbundene Stangen (69), wobei jede Stange mit Spiel eine Bohrung (70) des Trägers (4) und die rohrförmige Nabe (68) des Kolbens (67) des entsprechenden Zylinders durchsetzt und an ihrem unteren freien Ende eine Scheibe (72) umfaßt, die dazu ausgelegt ist, in der Anflanschphase den Druck der Nabe (68) aufzunehmen.

9. Vorrichtung nach Anspruch 1, **dadurch gekennzeichnet**, daß das Drehzentrum (C) der Kugelnuß (13) in der horizontalen Ebene (H) liegt, welche durch die auf dem Träger (4) aufliegende Fläche des Kugelträgers (17) definiert ist.
